# EUROPÄISCHE PATENTANMELDUNG

(11) **EP 3 081 313 A1**
(43) Veröffentlichungstag der Anmeldung: **19.10.2016**
(21) Anmeldenummer: 15001052.8
(22) Anmeldetag: 13.04.2015
(51) Int. Cl.: B05B 13/00, G01N 21/91, G01N 13/00, G01N 21/84

(54) **VERFAHREN UND VORRICHTUNG ZUM PRÜFEN DER OBERFLÄCHENBESCHAFFENHEIT EINES BAUTEILS, INSBESONDERE EINES CARBONFASERVERSTÄRKTER-KUNSTSTOFF (CFK) BAUTEILS**

(71) Anmelder: Airbus Defence and Space GmbH, 85521 Ottobrunn (DE)
(72) Erfinder: Meer, Thomas, 85658 Egmating (DE)
(74) Vertreter: Isarpatent

(57) **Zusammenfassung**

Die vorliegende Erfindung betrifft ein Verfahren zum Prüfen der Oberflächenbeschaffenheit eines Bauteils (1), insbesondere für den Nachweis einer Beschichtungs- oder Klebungseignung, bei welchem die Oberfläche (3) des Bauteils (1) mit einer Prüfflüssigkeit (4) benetzt wird, wobei als Prüfflüssigkeit (4) ein fluoreszierender Primer aufgebracht wird, der anschließend auf der Oberfläche (3) eingetrocknet wird, und mit einer Lichtquelle (6) bestrahlt wird, so dass auf der Oberfläche (3) Bereiche (9) mangelhafter Oberflächenbeschaffenheit durch Fluoreszenz optisch sichtbar werden.

## Beschreibung

Die Erfindung betrifft ein Verfahren zum Prüfen der Oberflächenbeschaffenheit eines Bauteils, insbesondere eines CFK-Bauteils, für den Nachweis einer Beschichtung- oder Klebungseignung, bei welchem die Oberfläche des Bauteils mit einer Prüfflüssigkeit benetzt wird. Daneben betrifft die Erfindung auch eine Vorrichtung zur Durchführung dieses Verfahrens an einem Bauteil.

Das Einsatzgebiet der Erfindung erstreckt sich auf die Herstellung zu beschichtender oder zu klebender Bauteile, bei denen eine Mindestqualität der Oberflächenbeschaffenheit sicherzustellen ist, um den Beschichtungs- bzw. Klebevorgang fehlerfrei ausführen zu können. Hierfür sind hinreichende Adhäsions- und Benetzungseigenschaften der entsprechenden Bauteiloberflächen erforderlich. Die Eigenschaften dieser Bauteiloberflächen werden meist bereits im vorausgehenden formgebenden Prozess, wie beispielsweise Polymerspritzguss, Metalldruckguss oder Laminieren bestimmt. Denn bei diesen formgebenden Prozessen werden die Bauteile häufig durch Trennmittel auf Basis von Fluorkohlenwasserstoffen, Silikonen, Ölen oder Wachsen verunreinigt. Auch bei mechanischer Bearbeitung durch spannende Fertigungsverfahren können Kontaminationen der Bauteiloberfläche durch Kühlemulsionen und Schneidöle auftreten.

Gemäß des allgemein bekannten Standes der Technik werden derartige Bauteiloberflächen deshalb vor der Weiterverarbeitung durch einen recht aufwendigen Reinigungs- oder Aktivierungsschritt vorbehandelt.

Aus der DE 10 2005 027 106 B3 geht ein gattungsgemäßes Verfahren zum Prüfen der Oberflächenbeschaffenheit eines Bauteils hervor. Zunächst wird ein Sprühnebel aus Wasser als Prüfflüssigkeit erzeugt. Dieser wird mit der zu prüfenden Oberfläche des Bauteils in Kontakt gebracht, um hierauf Tropfen des Sprühnebels zu erzeugen. In einem vorgewählten Bereich der zu prüfenden Oberfläche werden die so gebildeten Tropfen optisch erfasst und hinsichtlich der Werteverteilung einer Tropfeneigenschaft, beispielsweise Volumen, Aufsichtsflächen, Umfänge und/oder Formfaktoren, bestimmt. Die ermittelte Werteverteilung wird anschließend mit einer Referenz - Werteverteilung zur Ermittlung der Oberflächenbeschaffenheit des vorgewählten Bereichs verglichen.

Dieses Prüfverfahren funktioniert allerdings nur auf absolut glatten Oberflächen. Versuche haben ergeben, dass hiermit nur eine unzureichende Differenzierung bezüglich schwacher Fehlstellen möglich ist. Daher lässt sich das Verfahren nicht auf strukturierte Oberflächen anwenden, welche beispielsweise bei vielen CFK-Bauteilen aufgrund von Schleifprozessen oder von zu entfernendem Abreißgewebe auftreten. Außerdem ist bei der Verwendung von Wasser als Prüfflüssigkeit eine vollständige Trocknung des Bauteils vorzunehmen, ehe dieses weiterverarbeitet werden kann.

Ferner existieren im allgemein bekannten Stand der Technik auch andere Prüfungsverfahren für Oberflächen, beispielsweise durch IR-Spektroskopie. Diese Methode ist jedoch nicht hinreichend oberflächensensitiv und nicht alle spezifischen Kontaminationen können hiermit detektiert werden. Weiterhin lassen sich nicht alle gattungsgemäßen Prüfungsverfahren in einen automatisierten Fertigungsprozess integrieren.

Aufgabe der vorliegenden Erfindung ist es, ein Verfahren sowie ein Vorrichtung zum Prüfen der Oberflächenbeschaffenheit eines Bauteils, insbesondere eines CFK-Bauteils mit strukturierter Oberfläche, zu schaffen, mit welchem die Beschichtungs- und Klebungseignung in einfacher Weise zuverlässig ermittelbar ist.

Die Aufgabe wird ausgehend von einem Verfahren gemäß dem Oberbegriff von Anspruch 1 in Verbindung mit dessen kennzeichnenden Merkmalen gelöst. Vorrichtungstechnisch wird die Aufgabe durch Anspruch 7 gelöst. Die jeweils abhängigen Ansprüche geben vorteilhafte Weiterbildungen der Erfindung wieder.

Die Erfindung schließt die verfahrenstechnische Lehre ein, dass als Prüfflüssigkeit ein fluoreszierender Primer auf die prüfende Oberfläche des Bauteils aufgebracht wird, welche anschließend auf der Oberfläche eingetrocknet wird und dann mit einer Lichtquelle bestrahlt wird, so dass auf der Oberfläche Bereiche mangelhafter Oberflächenbeschaffenheit optisch sichtbar werden.

Der Vorteil der erfindungsgemäßen Lösung liegt insbesondere darin, dass der als Prüfflüssigkeit verwendete fluoreszierende Primer einerseits durch die Fluoreszenz eine zuverlässige visuelle Erkennbarkeit der Oberflächenbedeckung mit Kontaminationen, beispielsweise mit Siloxanen, ermöglicht; andererseits führt die integrierte Primereigenschaft zu einer verbesserten Beschichtungs- oder Klebstoffhaftung, was zu einer höheren Alterungsbeständigkeit der Beschichtung bzw. Klebung führt. Das erfindungsgemäße Verfahren kann auch bei strukturierten Oberflächen angewendet werden und deckt auch kleinere Fehlstellen zuverlässig auf.

Vorzugsweise wird der fluoreszierende Primer auf die Oberfläche aufgesprüht. Hierdurch lässt sich diese spezielle Prüfflüssigkeit gleichmäßig über die zu testenden Bereiche der Oberfläche aufbringen. Dies kann entweder manuell oder automatisiert mit einer Sprüheinrichtung erfolgen. Für die Anzeige von schlecht klebbaren Bauteilen genügt auch ein teilweise gesprenkelter Auftrag der speziellen Prüfflüssigkeit.

Um die Prüfzeit zu minimieren wird gemäß einer weiteren die Erfindung verbessernden Maßnahme vorgeschlagen, den aufgesprühten fluoreszierenden Primer durch eine auf die Oberfläche gerichtete Wärmequelle zu trocknen. Hierbei sollte vorzugsweise eine Strahlungswärmequelle verwendet werden, um die Verteilung der Prüfflüssigkeit auf der Oberfläche nicht zu beinträchtigen.

Der getrocknete fluoreszierende Primer sollte gemäß einer weiteren die Erfindung verbessernden Maßnahme mit einer ultraviolettes Licht, sogenanntes Schwarzlicht, ausstrahlenden Lichtquelle bestrahlt werden. Ultraviolettes Licht erleichtert die Erkennbarkeit der Bereiche mangelnder Oberflächenbeschaffenheit, in dem Kontaminationen durch unterschiedlich stark fluoreszierende Bereiche dargestellt werden. Dies bedeutet, dass Bereiche unterschiedlicher Kontaminationen unterschiedlich stark fluoreszieren. Durch die integrierte Primereigenschaft der Prüfflüssigkeit werden diese Bereiche mangelhafter Beschichtungs- und Klebungseignung zumindest teilweise umgewandelt in Bereiche hinreichender Beschichtungs- oder Klebungseignung. Nur bei sehr starken Kontaminationen wäre eine zusätzliche Behandlung der Oberfläche erforderlich, um die Beschichtungs- oder Klebungseignung herbeizuführen. Somit dient das erfindungsgemäße Verfahren auch der Einsparung von eventuellen Verfahrenszwischenschritten.

Das erfindungsgemäße Verfahren wird vorzugsweise mit einer Vorrichtung durchgeführt, die eine Sprüheinheit zum Benetzen der Oberfläche des Bauteils mit der speziellen Prüfflüssigkeit aufweist sowie eine zusätzliche Lichtquelle zur Beleuchtung der behandelten Oberfläche mit ultraviolettem Licht. Im Rahmen einer weiteren Automatisierung kann der Vorrichtung eine Wärmequelle zum schnelleren trocknen der behandelten Oberfläche hinzugefügt werden. Ferner ist es möglich, die Vorrichtung mit einer optischen Kameraeinheit und nachgeschalteter Auswerteeinheit zum automatischen Prüfen der Oberflächenbeschaffenheit des Bauteils per Mustervergleich auszustatten

Nachfolgend wird anhand der beigefügten Zeichnungen näher auf ein bevorzugtes Ausführungsbeispiel der Erfindung eingegangen. Es zeigen:
- **Fig. 1**: eine schematische Darstellung einer Vorrichtung zum Prüfen der Oberflächenbeschaffenheit eines Bauteils,
- **Fig. 2**: eine schematische Detaildarstellung eines Oberflächenbereichs des zu prüfenden Bauteils mit hierauf erkennbaren Bereichen mangelhafter Oberflächenbeschaffenheit.

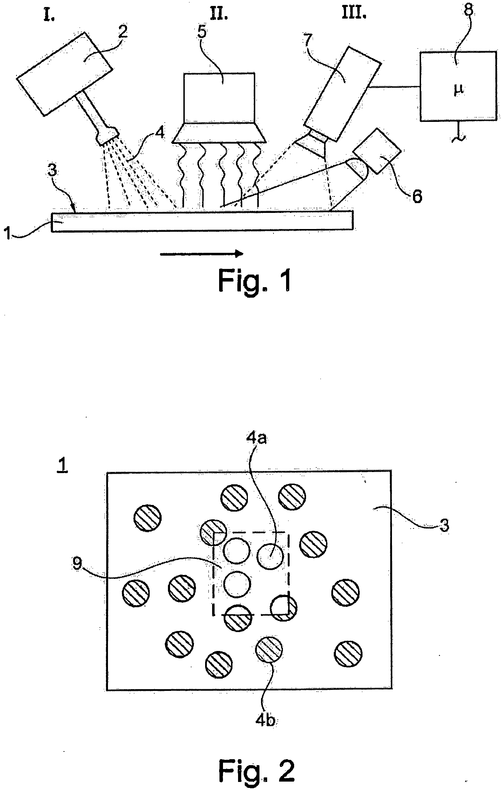

Gemäß Figur 1 besteht eine Vorrichtung zum Prüfen der Oberflächenbeschaffenheit eines Bauteils 1, welches hier exemplarisch ein CFK-Bauteil ist, im Wesentlichen aus einer Sprüheinheit 2 zum Benetzen einer Oberfläche 3 des Bauteils 1 mit einer Prüfflüssigkeit 4. Die Prüfflüssigkeit 4 ist ein fluoreszierender Primer, welcher sowohl Leuchteigenschaften als auch Haftvermittlungseigenschaften besitzt. Die durch die Sprüheinheit 2 als dünner Film auf die Oberfläche 3 des Bauteils 1 aufgebrachte Prüfflüssigkeit 4 wird anschließend durch eine strahlende Wärmequelle 5 in Form eines Heizschirms auf der Oberfläche 3 eingetrocknet. Wird anschließend die Oberfläche 3 mit einer hierauf gerichteten Lichtquelle 6 bestrahlt, so werden -hier nicht weiter erkennbare- Bereiche mit mangelnder Oberflächenbeschaffenheit optisch sichtbar. Die Lichtquelle 6 emittiert ultraviolettes Licht, so dass die optische Sichtbarkeit durch Fluoreszenzunterschiede des Primers auf der Oberfläche 3 besonders kräftig hervortritt.

Zur Automation des Prüfverfahrens ist im Rahmen der beispielhaften Vorrichtung auch eine optische Kameraeinheit 7 vorhanden, welche die Bereiche mit mangelhafter Oberflächenbeschaffenheit auf der Oberfläche 3 des Bauteils 1 als Bildsignale erfasst. Eine nachgeschaltete elektronische Auswerteinheit 8 führt einen Mustervergleich der erfassten Bildsignale mit hinterlegten Bildmustern durch, um signifikante Bereiche mit mangelhafter Oberflächenbeschaffenheit zu identifizieren und auszugeben.

Beim automatisierten Prüfverfahren läuft das Bauteil 3 in dargestellter Pfeilrichtung durch die Vorrichtung, in dem zuerst an einer Station I. die Prüfflüssigkeit 4 auf die Oberfläche 3 des Bauteils 1 aufgebracht wird. An einer zweiten Station II. wird die aufgesprühte fluoreszierende Prüfflüssigkeit 4 durch eine auf die Oberfläche 3 gerichtete strahlende Wärmequelle 5 getrocknet. An einer dritten Station III. werden mit Hilfe einer ultravioletten Lichtquelle 6 in Kombination mit einer optischen Kameraeinheit 7 Bereiche mit mangelhafter Oberflächenbeschaffenheit des Bauteils 1 erfasst und ausgewertet.

Die Figur 2 stellt ein exemplarisches Bild eines Teils einer Oberfläche 3 des Bauteils 1 dar. Hierauf befindet sich ein Bereich 9 mangelhafter Oberflächenbeschaffenheit, der eine schlechte Klebeigenschaft infolge durch Kontamination mit beispielsweise Silikonen aufweist (innerhalb gestrichelter Linie). Erkennbar wird dieser Bereich 9 durch die hierin befindlichen Tropfen aus eingetrockneter Prüfflüssigkeit 4a welche eine sehr geringere Fluoreszenz aufweisen, als benachbart zum Bereich 9 befindliche Tropfen aus getrockneter Prüfflüssigkeit 4b, welche eine vergleichsweise hohe Fluoreszenz aufweisen.

Durch die in der Prüfflüssigkeit 4 integrierte Primereigenschaft können die Verunreinigungen zumindest teilweise unschädlich gemacht werden und eine verbesserte Hafteignung für eine anschließende Beschichtung mit einem Decklack oder eine Klebung an einem anderen Bauteil wird hergestellt, ohne dass ein Reinigungsschritt erforderlich ist. Ergibt das Prüfverfahren jedoch weitere und größere Bereiche einer vergleichsweise schlechteren Oberflächenbeschaffenheit, so kann in Ergebnis des Prüfverfahrens entschieden werden, das Bauteil 3 zunächst einer Reinigung der Oberfläche zuzuführen, ehe eine weitere oberflächensensitive Bearbeitung erfolgt.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, das erfindungsgemäße Prüfverfahren rein manuell durchzuführen. Ebenso kann gegebenenfalls auf eine separate Wärmequelle verzichtet werden, falls es beim speziellen Anwendungsfall nicht auf eine besonders schnelle Eintrocknung des fluoreszierenden Primers auf der Oberfläche 3 des Bauteils 1 ankommt.

### Bezugszeichen

- 1: Bauteil
- 2: Sprüheinheit
- 3: Oberfläche
- 4: Prüfflüssigkeit
- 5: Wärmequelle
- 6: Lichtquelle
- 7: Kameraeinheit
- 8: Auswerteeinheit
- 9: Bereich (mangelhafte Oberflächenbeschaffenheit)

## Patentansprüche

1. Verfahren zum Prüfen der Oberflächenbeschaffenheit eines Bauteils (1), insbesondere für den Nachweis einer Beschichtungs- oder Klebungseignung, bei welchem die Oberfläche (3) des Bauteils (1) mit einer Prüfflüssigkeit (4) benetzt wird,
**dadurch gekennzeichnet, dass** als Prüfflüssigkeit (4) ein fluoreszierender Primer aufgebracht wird, der anschließend auf der Oberfläche (3) eingetrocknet wird, und mit einer Lichtquelle (6) bestrahlt wird, so dass auf der Oberfläche (3) Bereiche (9) mangelhafter Oberflächenbeschaffenheit durch Fluoreszenz optisch sichtbar werden.

2. Verfahren nach Anspruch 1,
**dadurch gekennzeichnet, dass** der fluoreszierende Primer auf die Oberfläche (3) aufgesprüht wird.

3. Verfahren nach Anspruch 2,
**dadurch gekennzeichnet, dass** der aufgesprühte fluoreszierende Primer durch eine auf die Oberfläche (3) gerichtete strahlende Wärmequelle (5) getrocknet wird.

4. Verfahren nach Anspruch 1,
**dadurch gekennzeichnet, dass** durch die Lichtquelle (6) vornehmlich ultraviolettes Licht emittiert wird.

5. Verfahren nach Anspruch 1,
**dadurch gekennzeichnet, dass** die optische Sichtbarkeit durch Fluoreszenzunterschiede des Primers derart auf der Oberfläche (3) hervorgerufen wird, dass Bereiche (9) mangelhafter Oberflächenbeschaffenheit durch eine auffallend geringe Fluoreszenz hervortreten.

6. Verfahren nach Anspruch 1,
**dadurch gekennzeichnet, dass** durch die in die Prüfflüssigkeit (4) integrierte Primereigenschaft Bereiche (9) mangelhafter Oberflächenbeschaffenheit zusätzlich in Bereiche hinreichender Klebungseignung umgewandelt werden.

7. Vorrichtung zur Durchführung eines Verfahrens nach einem der vorstehenden Ansprüche, mit einer Sprüheinheit (2) zum Benetzen der Oberfläche (3) des Bauteils (1) mit der Prüfflüssigkeit (4),
**dadurch gekennzeichnet, dass** die Prüfflüssigkeit (4) ein fluoreszierender Primer ist, der nach dem Eintrocknen und Bestrahlen mit einer auf die behandelnde Oberfläche (3) gerichtete Lichtquelle (6) Bereiche (9) mit mangelnder Oberflächenbeschaffenheit optisch anzeigt.

8. Vorrichtung nach Anspruch 7,
**dadurch gekennzeichnet, dass** eine optische Kameraeinheit (7) zur Erfassung der Bereiche (9) mit mangelhafter Oberflächenbeschaffenheit auf die Oberfläche (3) des Bauteils (1) gerichtet ist.

9. Vorrichtung nach Anspruch 8,
**dadurch gekennzeichnet, dass** die optische Kameraeinheit (7) an eine nachfolgende elektronische Auswerteeinheit (8) angeschlossen ist, um die erfassten Bildsignale durch Mustervergleich hinsichtlich signifikanter Bereiche (9) mit mangelhafter Oberflächenbeschaffenheit zu identifizieren.

10. Vorrichtung nach Anspruch 7,
**dadurch gekennzeichnet, dass** eine strahlende Wärmequelle (5) zum Trocknen der Prüfflüssigkeit (4) auf die Oberfläche (3) des Bauteils (1) gerichtet ist.

11. Vorrichtung nach Anspruch 7,
**dadurch gekennzeichnet, dass** die zur Prüfung vorgesehene Oberfläche (3) des Bauteils (3) strukturiert ausgebildet ist.

12. Vorrichtung nach Anspruch 7,
**dadurch gekennzeichnet, dass** das zu prüfende Bauteil (1) als ein CFK-Bauteil ausgebildet ist.
